# EUROPEAN PATENT SPECIFICATION

(11) **EP 0 426 012 B1**
(45) Date of publication and mention of the grant of the patent: **01.05.1996**
(21) Application number: 90120498.2
(22) Date of filing: 25.10.1990
(51) Int. Cl.: G01N 27/07, G01R 27/22

(54) **Conductivity meter**
Leitfähigkeitsmessgerät
Appareil de mesure de conductivité

(30) Priority: 28.10.1989 JP 126303/89 U
(43) Date of publication of application: 08.05.1991
(73) Proprietor: HORIBA, LTD., Minami-ku Kyoto (JP)
(72) Inventor: Iwamoto, Yasukazu, Ing., Fushimi-ku, Kyoto (JP)
(74) Representative: TER MEER - MÜLLER - STEINMEISTER & PARTNER

(56) References cited:
- GB-A- 869 226
- US-A- 3 025 458

## Description

### BACKGROUND OF THE INVENTION

### Field of the Invention

The present invention relates to a conductivity meter as claimed in the preamble of claim 1, and especially to a conductivity meter applying the alternating current bi-pole method.

### Description of the Prior Art

When measuring the conductivity by the alternating current bi-pole method, a conductivity cell mainly comprises an electrode-supporting body and a pair of electrodes disposed at suitable intervals from said electrode-supporting body is used. However, an electric double layer due to the separation of charges is produced at an interface between said electrodes and a sample solution so that in case where said sample solution has a high concentration, a capacitance of a condenser (polarized capacitance) due to said electric double layer leads to a great error in the measurement. Therefore, the following measures have been usually taken:
(1) For example, a voltage applied between the electrodes has been lowered or a surface area of the electrodes has been increased to reduce a current density;
(2) A measuring frequency has been heightened; and the like.

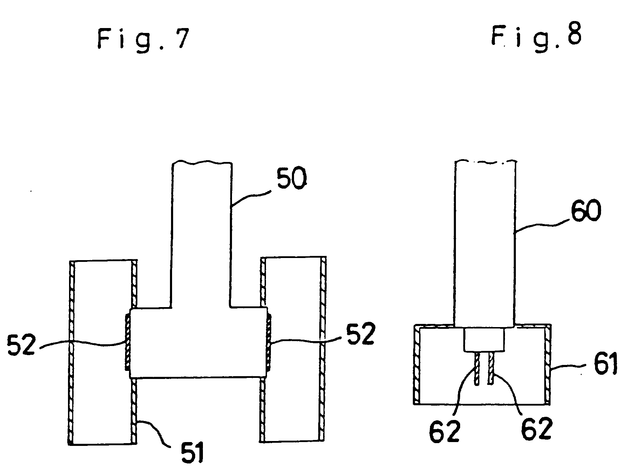

However, even in case of such measures, in a high-concentration solution containing an electrolyte in a quantity of scores of %, an error of measurement could not be prevented. Therefore, it was necessary to increase the resistance between the poles (cell constant). So, for measuring the conductivity of the high-concentration solution an electrode-supporting body 50 has been provided with a cover 51 at a pointed end thereof in, for example, a H letter-shaped form and electrodes 52, 52 have been disposed thereon at a considerable interval to increase the cell constant, as shown in Fig. 7.

On the other hand, for measuring the conductivity of a low-concentration solution, such as pure water, in general a distance between electrodes 62, 62 has been reduced as far as possible to reduce the cell constant, as shown in Fig. 8, in order to reduce an influence by an external induction and an error due to an electrostatic capacitance. Referring to Fig. 8, reference numeral 60 designates an electrode-supporting body and reference numeral 61 designates a cover.

As above described, it was necessary to use a conductivity cell having different cell constants depending upon the concentration of the solution and obtained by, for example, changing the positions of the electrodes 52, 62, the construction of the electrodes 52, 62 or the form of the covers 51, 61. Accordingly, in the case where the conductivity of the solution has to be measured over a wide range, it is necessary to use several kinds of cells different in cell constant. In short, conductivity cells different in form and construction have to be prepared and suitably selected depending upon the conductivity of the solution.

For example, the measuring range of a conductivity cell using platinum black electrodes is 0.01 µS/cm to 10 µS/cm in case of a low-conductivity cell (having a cell constant of 0.1 cm⁻¹), 0.1 µS/cm to 100 µS/cm in case of a general cell (having a cell constant of 1 cm⁻¹), and 1 µS/cm to 1 S/cm in case of a high-conductivity cell (having a cell constant of 10 cm⁻¹).

### SUMMARY OF THE INVENTION

It is an object of the present invention to provide a conductivity meter for measuring the conductivity of a solution over a wide range by means of only a single conductivity cell.

In order to achieve the above described object, a conductivity meter according to the present invention comprises an electrode-supporting body provided with a pair of electrodes disposed at a suitable interval and two guard rings one formed of a conductor and the other formed of an insulating material, only one said guard rings being detachably mounted at any one time on said electrode-supporting body so as to cover said electrodes.

According to the present invention, in the case where a conductivity of a high-concentration solution is to be measured, a guard ring formed of an insulating material is mounted on the electrode-supporting body so as to cover the pair of electrodes disposed within said electrode-supporting body at a suitable interval. In addition, in the case where a conductivity of a low-concentration solution is to be measured, a guard ring formed of a conductor is mounted on the electrode-supporting body so as to cover said pair of electrodes.

### BRIEF DESCRIPTION OF THE DRAWINGS

One preferred embodiment of the present invention is shown in Figs. 1 to 6, in which
- Fig. 1: is a longitudinal sectional view showing main parts of a conductivity meter;
- Fig. 2: is a disintegrated perspective view showing the conductivity meter of Fig. 1;
- Fig. 3 and 4: are diagrams for describing an operation and
- Fig. 5 and 6: are circuit diagrams showing main parts of a conductivity-measuring and detecting circuit.
- Fig. 7 and 8: are diagrams for describing the prior art.

### DESCRIPTION OF THE PREFERRED EMBODIMENTS

One preferred embodiment of the present invention will be below described with reference to the drawings.

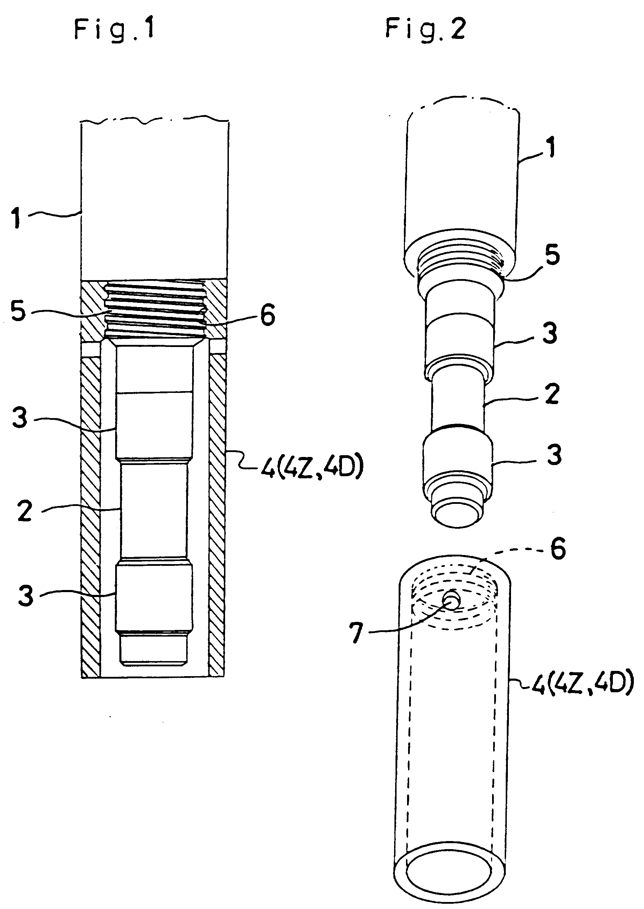

Referring now to Figs. 1 and 2 showing main parts of a conductivity meter according to the present invention, reference numeral 1 designates an electrode-supporting body formed of an insulating material, such as glass or plastics, and having two pieces (a pair) of tubular electrodes (having an outside diameter of rₐ and a width of l₂) 3,3 coaxially positioned at an interval of l₁ on a rod-like portion 2 formed at a pointed end thereof. It is preferably that these electrodes 3,3 are made of platinum when said electrode-supporting body 1 is made of glass while they are made of a stainless steel when the electrode-supporting body 1 is made of plastics.

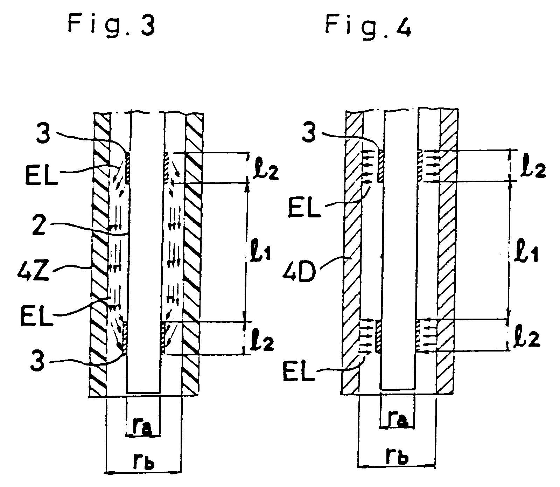

Reference numeral 4 designates tubular guard rings (having an inside diameter of r_{b}) covering the electrodes 3, 3 to regulate electric lines of force (lines shown by a mark EL in Figs. 3 and 4) produced between the electrodes 3, 3 when an appointed alternating current voltage is applied between the electrodes 3,3 for the measurement. One side (the upper) of said guard rings 4 is provided with a female screw portion formed on an inner circumferential surface of an opening portion theReof to be screwed onto a male screw portion 5 formed on an upper portion of said rod-like portion 2. Further, a vent pole 7 is provided opened below said female screw portion 6. And, according to the present invention, these guard rings 4 having the quite same one form and size are made of an insulating material, such as plastics or glass, and of a conductor such as a stainless steel. Hereinafter, said guard ring made of an insulating material is designates by reference numeral 4Z and said guard ring made of a conductor is designated by reference numeral 4D.

In case the conductivity of a high-concentration solution is to be measured, the guard ring 4Z made of an insulating material is mounted on the electrode-supporting body 1 and immersed in said solution under such a condition as shown in Fig. 3. And, upon applying an appointed alternating current voltage between the electrodes 3, 3, said electric lines of force EL pass through a gap between the electrode-supporting body 1 and the guard ring 4Z. At this time, a cell constant C₁ is expressed by the following equation:${\text{C}}_{\text{1}} {\text{= l}}_{\text{1}} {\text{/π (r}}_{\text{b}} {}^{\text{2}} {\text{- r}}_{\text{a}} {}^{\text{2}} {\text{) [cm}}^{\text{-1}} \text{]}$

In addition, in the case the conductivity of a low-concentration solution is to be measured, the guard ring 4D made of a conductor is mounted on the electrode-supporting body 1 and immersed in said solution under such a condition as shown in Fig. 4. And, upon applying an appointed alternating current voltage between the electrodes 3, 3, electric lines of force EL are produced so that the electrodes 3, 3 may be connected with the guard ring 4D by the electric lines of force EL in the shortest distance. A cell constant C₂ at this time is expressed by the following equation:${\text{C}}_{\text{2}} {\text{= l/(πl}}_{\text{2}} {\text{·log r}}_{\text{b}} {\text{/r}}_{\text{a}} {\text{) [cm}}^{\text{-1}} \text{]}$

Upon substituting ra = 0.5 cm, r_{b} = 0.65 cm, l₁= 5.4 cm and l₂ = 0.36 cm in the respective equations, cell constants C₁ = 10[cm⁻¹] and C₂ = 0.1[cm⁻¹] are obtained. In short, the guard rings are equal in external form and size and one guard ring 4Z can be used for the measurement of the high-concentration solution while the other guard ring 4D can be used for the measurement of the low-concentration solution in the case where one guard ring 4D is made of a conductor and thus not only the guard rings 4Z, 4D having a common dimension can be obtained but also a single electrode-supporting body 1 can be used.

Accordingly, it is sufficient that merely one electrode-supporting body 1 is prepared and merely the guard rings 4Z, 4D mounted on the pointed end of the electrode-supporting body 1 are exchanged when the high-concentration solution or the low-concentration solution is measured.

In addition, although the guard ring 4D made of a conductor was made of a stainless steel in the above described preferred embodiment, a body of the guard ring may be formed of an insulating material and a suitable metal, such as nickel, may be plated on a surface of said body of the guard ring. In such the case, the conductivity meter can be used also for the measurement of a solution having a relatively low concentration.

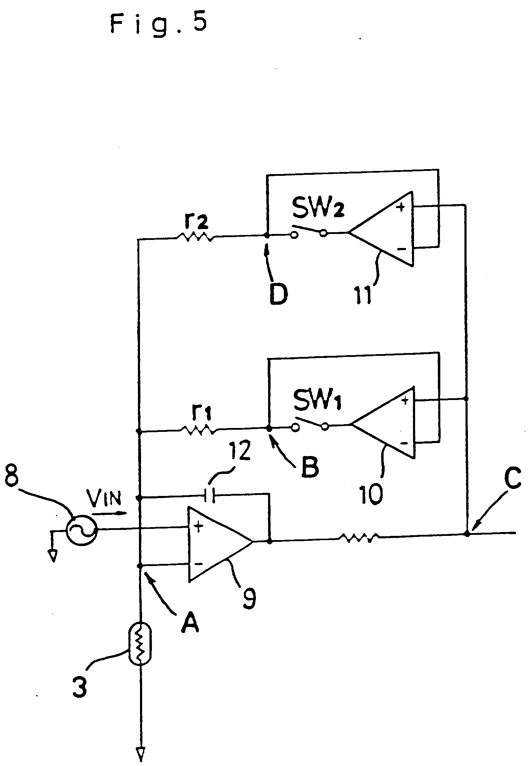

Next, referring to Fig. 5 showing a conductivity-measuring and detecting circuit of the above described conductivity meter, reference numeral 8 designates an oscillator used for generating an applied input, reference numeral 9 designates an operational amplifier used for generating a signal input, r₁, r₂ designate gain resistors, SW1, SW2 designate analog switches, and reference numerals 10, 11 designate operational amplifiers, said operational amplifiers 10, 11 being connected with said gain resistors r₁, r₂ and said analog switches SW1, SW2 in series.

In the case where the range is changed over by the gain resistor r₁ in this circuit, the analog switch SW1 is turned on and the analog switch SW2 is turned off so that a resistance of the gain resistor r₂ may not be added.

A voltage V_{IN} from said oscillator 8 is applied to a plus terminal of said operational amplifier 9, whereas a voltage at a point A where the electrode 3 is connected amounts to V_{IN}. In addition, reference numeral 12 designates an oscillation-preventing condenser connected with a feed-back portion of the operational amplifier 9. The condenser 12 is connected between the output of the amplifier 9 and its minus terminal which is connected to the point A and to each of the resistors r₁, r₂. The output of the amplifier 9 is connected to each positive terminal of the amplifiers 10, 11 having the negative terminal thereof connected to the node between the resistor r₁, r₂ and the switch SW1, SW2, respectively. Provided that a resistance of the electrode 3 is Rτ, a voltage V_{B} at a point B is expressed by the following equation:${\text{V}}_{\text{B}} {\text{= V}}_{\text{IN}} {\text{x (1 + r}}_{\text{1}} \text{/Rτ)}$

In addition, a feed-back is charged to the operational amplifier 10 at this time but it is not charged to the operational amplifier 11 because the analog switch SW2 is turned off, so that a voltage V_{D} at a point D is expressed by the following equation:${\text{VD = V}}_{\text{IN}}$

Accordingly, a voltage V_{C} at an output point C is expressed by the following equation:${\text{V}}_{\text{C}} {\text{= V}}_{\text{IN}} {\text{x (1 + r}}_{\text{1}} \text{/Rτ)}$

Thus, the output V_{C} is changed over in gain by merely a resistance of the gain resistor r₁.

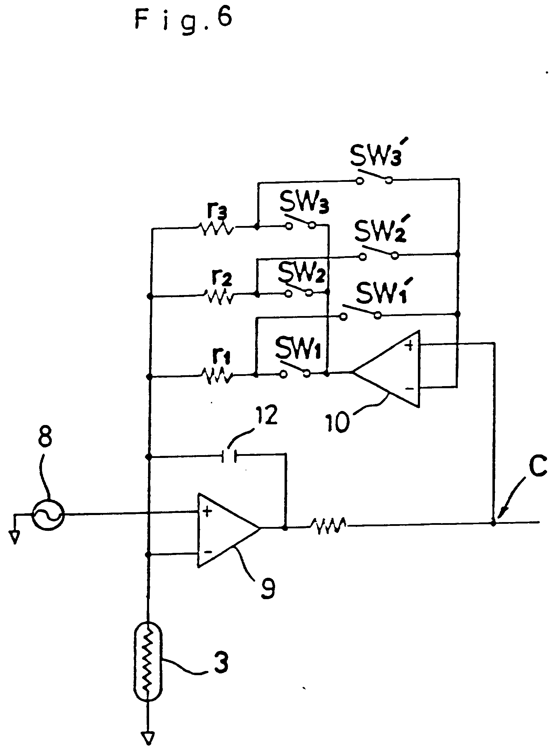

Fig. 6 shows another example of the conductivity-measuring and detecting circuit. The basic circuit is common in Fig. 6 and Fig. 5. Same reference numerals as in Fig. 5 designate the same elements.

In this circuit, merely one of the operational amplifiers 10 is used. Analog switches SW1, SW2 and SW3 and gain resistors r₁, r₂ and r₃ are connected with an output portion of this operational amplifier 10 in series, respectively, and these are connected with each other in parallel. Further, a node between an analog switch SW1, SW2 and SW3 and a gain resistor r₁, r₂, r₃ is connected through an analog switch SW1′, SW2′ and SW3′ with the negative terminal of said amplifier, respectively. The positive terminal of the amplifier 10 is connected to the output of the amplifier 9 having its negative input terminal connected to each of the resistors r₁, r₂, r₃ and to the electrode 3. Thus, it is sufficient that merely one operational amplifier 10 is connected with the feed-back portion of the operational amplifier 9 for use in a signal input.

Besides, the function of changing over the gain in the detecting circuit shown in Fig. 6 is quite the same as that in the detecting circuit shown in Fig. 5.

Although two circuit branches for changing-over the gain are used in the detecting circuit shown in Fig. 5 and three circuit branches for changing-over the gain are used in the detecting circuit shown in Fig. 6, it goes without saying that this number of circuit branches is not limited to that numbers.

As above described, according to the present invention, the conductivity of the solution can be measured over a wide range by merely combining the guard ring made of an insulating material and the guard ring made of a conductor which both have the same dimensions with the single electrode-supporting body. The measuring operation can be sufficiently carried out by merely exchanging the guard ring for the electrode-supporting body, so that the measurement can be remarkably simplified. In addition, it is unnecessary to select the conductivity cell to be used depending upon the conductivity of the solution as in the conventional conductivity meter, so that it is unnecessary to prepare several kinds of conductivity cells different in cell constant and thus also the costs of plant and equipment can be reduced.

## Claims

1. A conductivity meter comprising an insulating electrode-supporting body (1) provided with a pair of electrodes (3, 3) disposed at a suitable interval (l₁), and two guard rings, one (4D) formed of a conductor and the other (4Z) formed of an insulating material, only one of said guard rings being detachably mounted at any one time on said electrode-supporting body (1) so as to cover said electrodes (3, 3).

2. The conductivity meter as claimed in claim 1, **characterized in that** the electrodes (3, 3) are tubular electrodes coaxially positioned on a rod-like portion (2) of the electrode-supporting body (1) and separated in axial direction thereof.

3. The conductivity meter as claimed in claim 1 or 2, **characterized in that** each guard ring (4D, 4Z) has a tubular shape.

4. The conductivity meter as claimed in claims 1, 2 or 3, **characterized in that** each guard ring (4D, 4Z) is provided on its upper side with a female screw portion (6) to be screwed onto a male screw portion (5) formed on an upper part of said rod-like portion (2).

5. The conductivity meter as claimed in one of the claims 1 to 4, **characterized in that** each guard ring (4D, 4Z) comprises a vent hole (7) provided below said female screw portion (6).

6. The conductivity meter as claimed in one of the claims 1 to 5, **characterized in that** the electrode-supporting body (1) is made of glass.

7. The conductivity meter as claimed in one of the claims 1 to 5, **characterized in that** the electrode-supporting body (1) is made of plastics.

8. The conductivity meter as claimed in claim 6, **characterized in that** the electrodes (3, 3) are made of platinum.

9. The conductivity meter as claimed in claim 7, **characterized in that** the electrodes (3, 3) are made of stainless steel.

10. The conductivity meter as claimed in one of the claims 1 to 9, **characterized in that** the guard ring (4Z) formed of an insulating material is made of plastics or glass.

11. The conductivity meter as claimed in one of the claims 1 to 9, **characterized in that** the guard ring (4D) formed of an conducting material is made of stainless steel.

12. The conductivity meter as claimed in one of the claims 1 to 9, **characterized in that** the guard ring (4D) having a conductivity comprises a body formed of an insulating material and a conductive layer formed on the surface of said body.

13. The conductivity meter as claimed in claim 11, **characterized in that** the conductive layer is a Ni-layer.

## Patentansprüche

1. Leitfähigkeitsmeßgerät mit einem isolierenden Elektrodenhaltekörper (1) mit einem Paar Elektroden (3, 3), die mit geeignetem Abstand (l₁) angeordnet sind, und zwei Schutzringen, von denen der eine (4D) aus einem Leiter besteht und der andere (4Z) aus einem isolierenden Material besteht, wobei jeweils nur einer der Schutzringe wegnehmbar am Elektrodenhaltekörper (1) angebracht ist, um die Elektrode (3, 3) abzudecken.

2. Leitfähigkeitsmeßgerät nach Anspruch 1, **dadurch gekennzeichnet,** daß die Elektroden (3, 3) rohrförmige Elektroden sind, die koaxial an einem stabähnlichen Teil (2) des Elektrodenhaltekörpers (1) positioniert und in axialer Richtung desselben voneinander beabstandet sind.

3. Leitfähigkeitsmeßgerät nach einem der Ansprüche 1 oder 2, **dadurch gekennzeichnet,** daß jeder Schutzring (4D, 4Z) Rohrform hat.

4. Leitfähigkeitsmeßgerät nach einem der Ansprüche 1, 2 oder 3, **dadurch gekennzeichnet,** daß jeder Schutzring (4D, 4Z) an seiner Oberseite mit einem Innengewinde-Schraubteil (6) versehen ist, der mit einem Außengewinde-Schraubteil (5) zu verschrauben ist, der im oberen Teil des stabförmigen Teils (2) ausgebildet ist.

5. Leitfähigkeitsmeßgerät nach einem der Ansprüche 1 bis 4, **dadurch gekennzeichnet,** daß jeder Schutzring (4D, 4Z) ein Belüftungsloch (7) aufweist, das unter dem Innengewindeschraubteil (6) vorhanden ist.

6. Leitfähigkeitsmeßgerät nach einem der Ansprüche 1 bis 5, **dadurch gekennzeichnet,** daß der Elektrodenhaltekörper (1) aus Glas besteht.

7. Leitfähigkeitsmeßgerät nach einem der Ansprüche 1 bis 5, **dadurch gekennzeichnet,** daß der Elektrodenhaltekörper (1) aus Kunststoff besteht.

8. Leitfähigkeitsmeßgerät nach Anspruch 6, **dadurch gekennzeichnet,** daß die Elektroden (3, 3) aus Platin bestehen.

9. Leitfähigkeitsmeßgerät nach Anspruch 7, **dadurch gekennzeichnet,** daß die Elektroden (3, 3) aus rostfreiem Stahl bestehen.

10. Leitfähigkeitsmeßgerät nach einem der Ansprüche 1 bis 9, **dadurch gekennzeichnet,** daß der aus isolierendem Material bestehende Schutzring (4Z) aus Kunststoff oder Glas besteht.

11. Leitfähigkeitsmeßgerät nach einem der Ansprüche 1 bis 9, **dadurch gekennzeichnet,** daß der aus leitendem Material bestehende Schutzring (4D) aus rostfreiem Stahl besteht.

12. Leitfähigkeitsmeßgerät nach einem der Ansprüche 1 bis 9, **dadurch gekennzeichnet,** daß der Leitfähigkeit aufweisende Schutzring (4D) einen aus isolierendem Material bestehenden Körper und eine auf der Oberfläche dieses Körpers ausgebildete leitende Schicht aufweist.

13. Leitfähigkeitsmeßgerät nach Anspruch 11, **dadurch gekennzeichnet,** daß die leitende Schicht eine Ni-Schicht ist.

## Revendications

1. Un instrument de mesure de conductivité comprenant un corps isolant de support d'électrode (1) muni d'une paire d'électrodes (3, 3) disposées à un intervalle adéquat (l₁) et deux anneaux de garde dont l'un (4D) est formé d'un conducteur et l'autre (4Z) est formé d'un matériau isolant, dans lequel à tout instant donné, uniquement l'un desdits anneaux de garde est monté sur ledit corps de support d'électrodes (1) afin de recouvrir lesdites électrodes (3, 3).

2. L'instrument de mesure de conductivité selon la revendication 1, caractérisé en ce que les électrodes (3, 3) sont des électrodes tubulaires positionnées de façon coaxiale sur une partie en forme de tige (2) du corps de support d'électrode (1), en étant séparées selon la direction longitudinale de ce dernier.

3. L'instrument de mesure de conductivité selon la revendication 1 ou 2, caractérisé en ce que chaque anneau de garde (4D, 4Z) présente une forme tubulaire.

4. L'instrument de mesure de conductivité selon la revendication 1, 2 ou 3, caractérisé en ce que chaque anneau de garde (4D, 4Z) est muni sur son extrémité supérieure, d'une partie à filetage femelle (6) destinée à être vissée sur une partie à filetage mâle (5)formée sur une partie supérieure de ladite partie en forme de tige (2).

5. L'instrument de mesure de conductivité selon l'une des revendications 1 à 4, caractérisé en ce que chaque anneau de garde (4D, 4Z) comprend un évent (7) situé en dessous de ladite partie à filetage femelle (6).

6. L'instrument de mesure de conductivité selon l'une des revendications 1 à 5, caractérisé en ce que le corps de support d'électrode (1) est réalisé en verre.

7. L'instrument de mesure de conductivité selon l'une des revendications 1 à 5, caractérisé en ce que le corps de support d'électrode (1) est réalisé en matière synthétique.

8. L'instrument de mesure de conductivité selon la revendication 6, caractérisé en ce que les électrodes (3, 3) sont réalisées en platine.

9. L'instrument de mesure de conductivité selon la revendication 7, caractérisé en ce que les électrodes (3, 3) sont réalisées en acier inoxydable.

10. L'instrument de mesure de conductivité selon l'une des revendications 1 à 9, caractérisé en ce que l'anneau de garde (4Z) formé d'un matériau isolant est réalisé en matière synthétique ou en verre.

11. L'instrument de mesure de conductivité selon l'une des revendications 1 à 9, caractérisé en ce que l'anneau de garde (4D) formé d'un matériau conducteur est réalisé en acier inoxydable.

12. L'instrument de mesure de conductivité selon l'une des revendications 1 à 9, caractérisé en ce que l'anneau de garde (4D) présentant une certaine conductivité comprend un corps formé d'un matériau isolant et une couche conductrice formée sur la surface dudit corps.

13. L'instrument de mesure de conductivité selon la revendication 11, caractérisé en ce que la couche conductrice est une couche en Ni.
